# EUROPÄISCHE PATENTSCHRIFT

(11) **EP 0 769 458 B1**
(45) Veröffentlichungstag und Bekanntmachung des Hinweises auf die Patenterteilung: **04.03.1998**
(21) Anmeldenummer: 96250197.9
(22) Anmeldetag: 11.09.1996
(51) Int. Cl.: B65F 1/10, B65F 1/14

(54) **Verfahren und Einrichtung zur Erfassung von Sammelmengen, insbesondere von Abfall aus Haushalten**
Method and device for determining the amount of collected material, in particular domestic refuse
Procédé et dispositif de détermination des quantités des produits collectés, notamment d'ordures ménagères

(30) Priorität: 15.09.1995 DE 19535843; 16.04.1996 DE 19617258
(43) Veröffentlichungstag der Anmeldung: 23.04.1997
(73) Patentinhaber: CSL Computer-Service Lauchhammer GmbH, 01987 Schwarzheide (DE)
(72) Erfinder: Kramer, Miak, 01993 Schipkau (DE)
(74) Vertreter: Haschick, Gerald

(56) Entgegenhaltungen:
- EP-A- 0 543 763
- EP-A- 0 608 767
- EP-A- 0 669 270
- DE-A- 4 318 416
- DE-A- 4 342 762
- FR-A- 2 705 952
- FR-A- 2 714 896
- US-A- 3 285 462

## Beschreibung

Die Erfindung findet vorzugsweise in der Abfallwirtschaft zur Erfassung und Bemessung individueller Sammelmengen, insbesondere von Restabfall aus Haushalten von Großwohnanlagen wohnungsbewirtschaftender Betriebe und Einrichtungen, Anwendung. Sie wird vor allem dort genutzt, wo eine Zuordnung der beispielsweise durch die öffentliche Abfallentsorgung eingesammelten Restabfallmengen zum individuellen Abfallerzeuger nicht möglich ist, um eine verursachergerechte Bemessung und Abrechnung vorzunehmen. Dabei ist auch Diskretion durch Anonymität zu wahren.

Aber auch in anderen Entsorgungs- und Wirtschaftsbereichen findet die Lösung zur zeitlich unabhängigen Erfassung mengenmäßig unterschiedlichen Größen verschiedener Stoffe Anwendung.

Es sind Erfassungssysteme für Schüttgutbehälter bekannt, bei denen insbesondere für die Erfassung von Abfallmengen, aber auch von Erntegut, bei der Befül lung des Sammelgroßbehälters eine Verwiegung der Anlieferungsmenge erfolgt. Eine derartige Lösung ist in der DE-OS 43 18 416 A1, B 65 F 1/10 beschrieben.

Diese Lösung hat mehrere Nachteile: Verwiegesysteme sind sehr aufwendig und weisen bei geringen Gewichten eine große Ungenauigkeit auf. Außerdem bedürfen Verwiegeeinrichtungen zum Erhalt ihrer Verbindlichkeit regelmäßiger Nacheichung. Diese hohen Aufwendungen führen zu einer geringeren Sammelplatzdichte und sind somit benutzerunfreundlich.

Neben der witterungsbedingten Gewichtsbeeinflussung ist der entscheidende Nachteil dieser Lösung, daß keine effektive Auslastung der Sammelgroßbehälter erreicht wird. Das hat zur Folge, daß auch nur teilweise gefüllte Sammelgroßbehälter entleert werden. Somit entsteht für einen teilweise gefüllten Sammelgroßbehälter der gleiche Entleerungsaufwand wie für einen vollständig gefüllten Behälter. Dabei ist die Umweltbelastung infolge häufigerer Sammeltouren des Entleerungsfahrzeuges noch nicht einmal berücksichtigt.

Weiterhin ist es nachteilig, daß mit der Einführung von Wägesystemen häufig die vorhandenen vertraglichen Grundlagen geändert werden müssen. Das ist mit einem hohen administrativen Aufwand verbunden und verringert vor allen Dingen den Vertrauensschutz des Bürgers. Außerdem wird die Flexibilität der Entsorgungslogistik erheblich eingeschränkt.

Auch ist es bekannt, die Befüllung von Sammelgroßbehältern durch Volumenschleusen bei Berechnung mittels Geld- oder Wertmarkeneinwurf vorzunehmen. Auch diese Lösungen gewährleisten keine optimale verursachergerechte Bemessung der Erfassungs- und somit der Entsorgungsaufwendungen. Vorkosten für den Abfallerzeuger und erhöhte Aufwendungen bei überfüllten, aber auch teilweise gefüllten und zur Entleerung bereitgestellten Sammelbehältern sind nachteilig. Weiterhin ist eine Offenlegungsschrift DE 43 42 762 bekannt. Dabei handelt es sich um eine Erfindungsanmeldung, die einen Schüttgutbehälter betrifft. In dem vorhandenen Deckel dieses Müllschüttgutbehälters wird eine verriegelbare Vorrichtung angebracht, die eine kontrollierte Befüllung ermöglicht durch Benutzer, die eine Identitäts- oder Wertmarke (Chipkarte) besitzen. Dieser eingebaute Deckel wird durch eine Lesereinheit ver- bzw. entriegelt. Nachteilig ist hierbei, daß der Einbau des zusätzlichen Deckels in den Deckel des Schüttgutbehälters einen erheblichen technischen Aufwand erfordert und eine zusätzliche Umrüstung des Entleerungsfahrzeugs auf Grundlage dieser speziellen Schüttgutbehälter notwendig ist und die Lesereinrichtung des Schüttgutbehälters ein kontaktbehaftetes Verfahren aufweist, welches für einen Allwetterrealbetrieb in Verbindung mit einer Mülltonne ungeeignet ist. Weiterhin ist bekannt, eine Einrichtung für das gebührenpflichtige Erfassen des Zugangs zu einem Kehrichtsammelraum EP 0 669 270 A1. Dabei wird eine Zugangsöffnung über eine Sperreinrichtung geöffnet und geschlossen, wobei der Zugang mit einem Datenträger aktiviert wird. Über dem Sammelraum ist ein Waagarm angeordnet, der an einem Ende schwenkbar gelagert und am anderen Ende auf einer mit einem Rechner zusammenwirkende Wägezelle abgestützt ist. Weiterhin ist eine Förderstrecke integriert, um die bestimmten Sammelmengen zu transportieren. Nachteil dieser Erfindung ist darin gegeben, daß ein hoher technischer Aufwand realisiert werden muß, und weiterhin ein kompliziertes Wägesystem angeordnet ist, welches bei bestimmten Temperatur- und Witterungsverhältnissen sehr störanfällig sich darstellt. Als eine weitere Lösung ist bekannt, eine Vorrichtung eines Sammelbehälters zur zeitweisen Aufbewahrung von Abfällen FR: 2 705 952. Dabei handelt es sich um eine technische lösung, wobei ein starrer Behälter mit einer beweglichen Klappe und einer verschließbaren Öffnung ausgeführt ist. An der Vorderfront ist eine Kontrollzone mit einem Visualisierungsbildschirm für die Darstellung von Informationen gegeben. Weiterhin ist eine Antenne zum Dialog für eine Benutzerkarte über einen Spalt zur Erfassung der Daten vorhanden. Der Behälter beinhaltet außerdem eine Schiebetür für die Verwertung der Abfälle durch eine Spezialfirma. Nachteilig ist hierbei, daß eine Informationseinrichtung für den Behälter benutzt wird, welche über eine Chipkarte funktioniert. Hierbei sind wieder äußere Witterungseinflüsse zur Benutzung einer Chipkarte nachteilig gegeben. Weiterhin ist eine Erfassungsschleuse vorhanden, welche keine Volumenzuordnung des Abfalls erkennen läßt. Somit ist eine Zuordnung über bestimmte Volumengrößen einer benutzenden Person nicht möglich.

Es ist Ziel der Erfindung, ein Verfahren und eine Einrichtung zum Erfassen von Sammelmengen, insbesondere von Abfällen aus Haushalten, zu schaffen, welche die Nachteile des Standes der Technik beseitigt, und eine ökonomisch vertretbare Variante darstellt, um eine Zuordnung der jeweiligen Müllmenge zu einer bestimmten Person möglich zu machen und ein Umrüsten von Schüttgutbehältern (Containern) nicht notwendig ist.

Aufgabe der Erfindung ist es, ein Verfahren und eine Einrichtung zum Erfassen von Sammelmengen, insbesondere von Abfällen aus Haushalten, zu realisieren, wobei bestimmte Daten verfahrenstechnisch der eingeworfenen Volumina erfaßt werden und zur Auswertung gelangen. Weiterhin ist es Aufgabe, eine Einrichtung zum Erfassen von Sammelmengen, insbesondere von Abfällen aus Haushalten, zu schaffen, wobei eine mengenmäßige Zuordnung von Sammelmengen durch verschiedene Öffnungsgrößen umgesetzt wird und über eine einfache Verriegelung in der jeweiligen Öffnung auf Grundlage einer Datenauswertung geschlossen und geöffnet wird.

Erfindungsgemäß wird die Aufgabe dadurch gelöst, daß die Ansprüche 1 bis 9 realisiert werden. Dabei wird gemäß Anspruch 1 ein kontaktloses induktives Identifikationsverfahren, Transpondersystem zur individuellen Sammelmengenzuordnung, Zuordnung der Verursacher, und Datenübertragung verwendet. Dieses Transpondersystem wird auf einer Müllbox, welche mehrere Müllbehälter umschließt, zu einer jeweiligen Schleuse mit jeweils unterschiedlichem Volumen zugeordnet. Erfindungsgemäß wird die Aufgabe ferner durch die Einrichtung nach Anspruch 2 gelöst, bei der eine Müllbox vorhanden ist, welche mehrere Müllbehälter umschließt. Zu einem jeweiligen Müllbehälter in der Müllbox ist eine kegelstumpfförmige Schleuse auf der Müllbox vorhanden. Diese kegelstumpfförmigen Schleusen weisen einen oberen Verschlußdeckel und einen unteren Verschlußdeckel auf. Diese beiden Verschlußdeckel sind um 90° versetzt angeordnet. Dabei sind sie über eine Achse drehbar starr gelagert. Zwischen dem Verschlußdeckel und dem unteren Verschlußdeckel ist eine Verriegelung der Drehachse vorhanden. Diese Verriegelung der Drehachse steht in Verbindung mit dem Identifikationssystem. Die Verriegelung der Drehachse ist bevorzugt über ein Sperrzahnrad in Verbindung mit einem Magnetriegel und einem darauf geschalteten Zugmagneten ausgeführt. Dabei wird der Zugmagnet in Verbindung mit dem Identifikationssystem von einem boxinternen Computer angesteuert. Durch einen individuell vom Abfallerzeuger mittels kontaktlos lesbarem Identifikator ausgelösten Befehl (nach Prüfung) wird der obere Schleusendeckel entriegelt und kann somit geöffnet werden, und die Befüllung der Schleuse ist somit möglich. Nach dem Schließen des oberen Verschlußdeckels wird der untere Verschlußdeckel der Schleuse geöffnet, und der Müllbeutel fällt aus der Schleuse in den Müllgroßbehälter.

Der die Öffnung des oberen Verschlußdeckels auslösende Befehl wird im boxinternen computer der Müllbox registriert und kann aber auch auf dem kontaktlos lesbaren Identifikator festgeschrieben werden. Dieser kontaktlos lesbare Identifikator ist individuell dem Abfallerzeuger (Wohnungsmieter) zugeordnet.

Mit der Aufsummierung aller Entleerungsbefehle innerhalb eines bestimmten Zeitraumes ist es möglich, zum Beispiel die Entsorgungskosten genau entsprechend dem entsorgten Volumen an den Besitzer des Identifikators zu berechnen.

Dies ist insbesondere dann von Vorteil, wenn infolge Platzmangels im Umfeld großer Wohngebäude nicht für jede Wohnung ein ausschließlich wohnungsbezogen nutzbarer Restabfallbehälter bereitgestellt werden kann und auf Müllgroßbehälter zurückgegriffen werden muß.

Die Benutzung der Müllgroßbehälter ermöglicht die Sammlung großvolumiger Gegenstände. Häufig sind diese aber sehr sperrig und erfordern nach kurzer Zeit eine Entleerung dieses Behälters. Damit verbundene Aufwendungen verursachen für alle Benutzer hohe Kosten, obwohl hier meistens nur einige der Berechtigten Nutzer waren.

Mit der erfindungsgemäßen Lösung werden nicht nur sperrige Güter von der Sammlung durch Müllgroßbehälter ausgeschlossen, sondern auch unberechtigte Abfallerzeuger.

Die Füllstandsanzeige für den Müllgroßbehälter kann über eine Zentraleinheit (boxinterner Computer) durch optische und/oder drahtlose Abfrage von einer mobilen Entleerungseinrichtung (Müllfahrzeug) den Entleerungsbedarf angeben.

Dadurch kann der Aufwand für die Überwachung der Entleerungen der Müllgroßbehälter wesentlich verringert werden. Bisher war es nicht auszuschließen, daß nur teilweise oder sehr gering gefüllte Müllgroßbehälter entleert wurden und der gesamte Entleerungsaufwand allen Nutzungsberechtigten in Rechnung gestellt wurde. Jetzt werden die Befüllungsgrade der Müllgroßbehälter durch die Ermittlung der Beschickungshäufigkeiten der Schleuse festgestellt.

Diese Befüllungsgrade werden sowohl dem Nutzer der Erfassungsschleuse und somit des Müllgroßbehälters angezeigt und signalisieren ihm die Möglichkeit der Befüllung.

Aber auch das mit der Entleerung beauftragte Unternehmen kann den Füllstand des Müllgroßbehälters signalisiert bekommen und über die Notwendigkeit zur Entleerung entscheiden. Damit ist es jetzt auch nachprüfbar, welcher wirkliche Entleerungsaufwand entstanden ist.

Die individuelle Zuordnung des Entsorgungsaufwandes zum jeweiligen Verursacher hat noch einen weiteren Effekt. Während bei den bisherigen Lösungen es insbesondere umweltbewußten Bürgern nicht möglich war, Nutznießer der Trennaufwendungen für Abfälle und Wertstoffe zu sein, schafft die erfindungsgemäße Lösung alle Voraussetzungen dazu.
Darüber hinaus werden insgesamt wesentlich weniger Wertstoffe in die Restabfallbehälter geworfen. Dies führt wiederum zu einer Verringerung des Bedarfes an Deponievolumen und spart weitere Kosten.

Die Erfindung ist in den nachfolgenden Figuren schematisch dargestellt und wird an Hand eines bevorzugten Ausführungsbeispiels näher erläutert. Es zeigen:
- Figur 1: eine Einrichtung zur Durchführung des Verfahrens zur Bemessung individueller Sammelmengen.
- Figur 2: eine kegelstumpfförmige Schleuse;
- Figur 3: eine Anordnung der Verschlußdeckel mit Verriegelung.

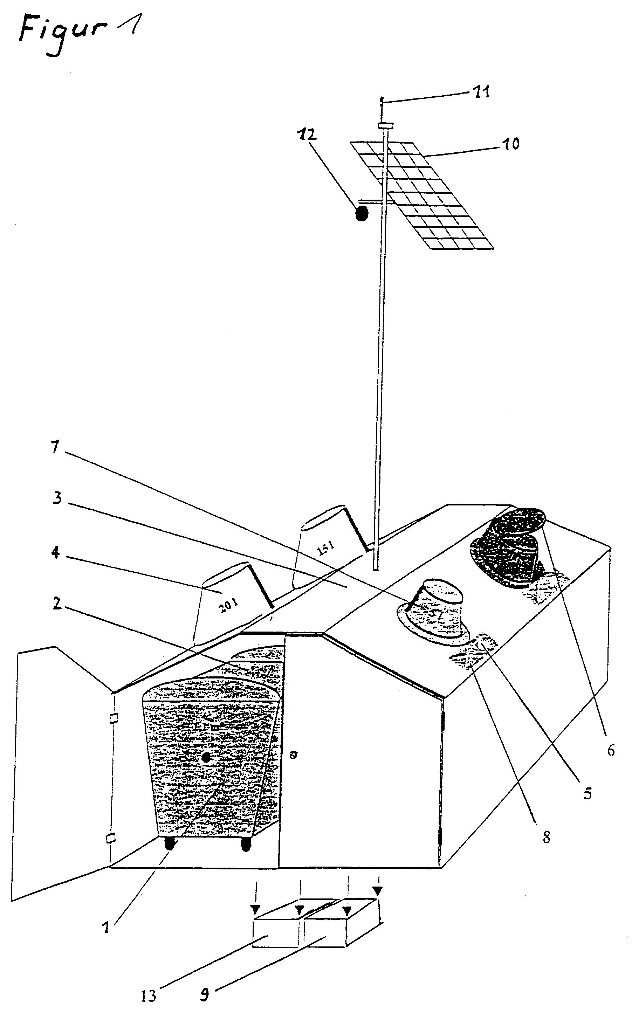

Mit der Figur 1 wird die allgemeine Einrichtung bzw. das Verfahren beschrieben. Zur Erfassung individueller Sammelmengen, insbesondere von Restabfällen aus Haushalten von Großwohnanlagen, werden vorzugsweise Müllgroßbehälter 1 mit einem Fassungsvermögen von 1100 Litern genutzt. Diese werden unter anderem auch bei der erfindungsgemäßen Lösung angewendet, indem sie mit geöffnetem Deckel 2 unter einer Müllbox 3 (verschließbares Gehäuse) angeordnet werden. Die vorzugsweise Anordnung der Müllgroßbehälter 1 ist dabei paarweise hinter- und nebeneinander, so daß sich demnach vier Müllgroßbehälter 1 unter einer Müllbox 3 befinden.
Die Müllbox 3 hat an den Stirnseiten große verschließbare Tore und ist beispielsweise aus Blech gefertigt. Sie dient dazu, daß die Befüllung der Müllgroßbehälter 1 nur über die darüber angeordneten Schleusen 4, 6, 7 erfolgen kann. Die hier kegelstumpfförmig gestalteten Schleusen 4, 6, 7 haben ein definiertes Fassungsvolumen von fünf, zehn, fünfzehn und zwanzig Litern. In diese Schleusen 4, 6, 7 können maximal gleichgroße Abfallmengen, zum Beispiel in Abfallbeuteln, eingebracht werden.

Das Einbringen geringer dimensionierter Abfallmengen ist möglich, aber uneffektiv.

Zur Befüllung der Schleusen 4, 6 oder 7 ist es erforderlich, daß mit einem kontaktlos lesbaren Identifikator (zum Beispiel Chip) durch berührungslose Anzeige in unmittelbarer Nähe eines Induktionslesers/Eingabezählers 8 der Besitzer des Chips und damit berechtigter Nutzer der Müllbox 3 seine Absicht zur Nutzung einer bestimmten Schleuse 4, 6 oder 7 angibt.

Ist eine Befüllung der Schleuse 4, 6 oder 7 möglich, wird das durch die Füllstandsanzeige 5 signalisiert. Danach läßt sich der Schleusendeckel öffnen und zum Beispiel die Schleuse 6 beschicken. Wird der Beschickungsvorgang nicht mit dem Schließen des Schleusendeckels beendet, ertönt ein Signal durch den Signalgeber 12.

Durch den Induktionsleser/Eingabezähler 8 werden die Schleusenbeschickungen durch die Chipbesitzer identifiziert und an den boxinternen Computer weitergeleitet. Alle innerhalb eines beliebigen Zeitraumes, insbesondere eines laufenden Jahres, durchgeführten Beschickungen des Müllgroßbehälters 1 werden zur Abrechnung erfaßt. Außerdem ermittelt der boxinterne Computer 9 die Anzahl der Beschickungen des jeweiligen Müllgroßbehälters 1 seit seiner letzten Entleerung zur Angabe des Füllstandes.

Mit dem jeweils letzten Entleerungsvorgang des Müllgroßbehälters 1 muß der Induktionsleser/Eingabezähler 8 in Nullstellung gebracht werden. Dies erfolgt hier durch eine mechanische Schalterbetätigung, entweder durch das Öffnen der dazugehörenden stirnseitgen Tür der Müllbox 3, welches zum Entleeren des Müllgroßbehälters 1 erforderlich ist. Aber auch durch das Bewegen des Müllgroßbehälters 1 zum Entleerungsfahrzeug kann der Nullstellungsimpuls ausgelöst werden.

Außerdem registriert der boxinterne Computer 9 unter der Müllbox 3 alle bisherigen Beschickungen für alle Entleerungen jedes Müllgroßbehälters 1 abrufbar.

Wenn die Zählung nach jeder Leerung des Müllgroßbehälters 1 mit der ersten Beschickung durch die Schleuse 4, 6, 7 beginnt und eine vorher begrenzte Anzahl von Beschickungen erreicht, wird dem Benutzer signalisiert, daß der Müllgroßbehälter 1 unter der ausgewählten Schleuse 4 oder 6 oder 7 gefüllt ist.

Eine Öffnung der Schleuse ist nicht mehr möglich. Der Abfallerzeuger muß eine andere Schleuse benutzen.
Zum Beispiel kann ein Müllgroßbehälter 1 maximal fünfundfünfzig Beschickungen durch die Zwanzig-Liter-Schleuse 4 oder zweihundertzwanzig Beschickungen durch die Fünf-Liter-Schleuse 7 aufnehmen. Da noch ein Schüttungskegel zu berücksichtigen ist, bleibt auf jeden Fall nach diesen Beschickungszahlen die jeweilige obere Schleusenöffnung 6 bis zur Leerung des darunter befindlichen Mullgroßbehälters 1 verschlossen.

Optional kann das Erfassungsverfahren am Induktionsleser/Eingabezähler 8 die Anzahl der Schleusenbeschickungen des jeweiligen Abfallerzeugers auf den Chip, zum Beispiel zu Kontrollzwecken aufschreiben.

Der aktuelle Befüllungsgrad des jeweiligen Müllgroßbehälters 1 wird für den Berechtigten über den boxinternen Computer 9 abrufbar gestaltet. Der Befüllungsgrad kann auch über das Funkinterface 11 zum Beispiel vom Bordcomputer eines Entleerungsfahrzeuges abgefragt werden. Weitere zur verursachergerechten Abrechnung der Benutzung der Müllbox 3 erforderlichen Informationen, wie zum Beispiel Beschickungsdatum, -uhrzeit, -dauer usw. der einzelnen Schleusen 4, 6, 7 sowie die Entleerungsangaben zu den Müllgroßbehältern 1 können ebenfalls über den boxinternen Computer 9 vermittelt werden.

Über die Solar-Bordspannungsversorgung 10 und einen dadurch aufladbaren Solarakkumulator 13 besteht die Möglichkeit der alternativen Stromversorgung für den Betrieb der erfindungsgemäßen Anlage. Es erweist sich als zweckmäßig, den Solarakkumulator 13 und den boxinternen Computer 9 unter der Müllbox 3 vandalismusgeschützt und im Erdboden frostsicher einzubauen. Über den Signalgeber 12 (Hupe) werden Mängel oder Fehlbedienungen signalisiert.

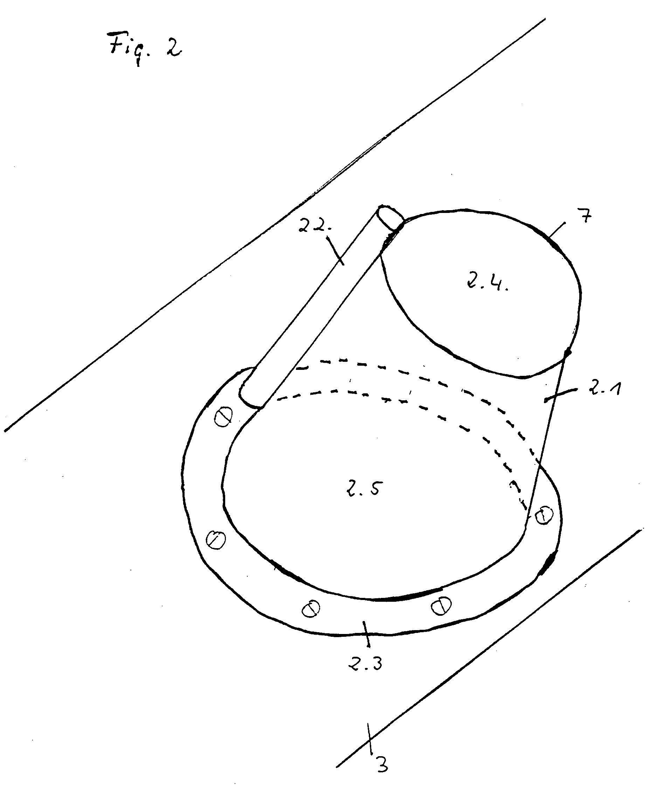

Figur 2 zeigt eine kegelstumpfförmige Schleuse im Detail. Der Körper mit einem definierten Füllungsvolumen, zum Beispiel 5 l oder 15 l, ist vom Betreiber den Erfordernissen gemäß einzeln auswechselbar und über einen Ring 2.3 angeschraubt und per Kontermuttern/Splint gesichert. Die Schleuse 1 ist konisch -also mit kleinerem Einfülloch 2.4 als Austrittsloch 2.5- und von innen kunststoffbeschichtet (sofern aus Blech) bzw. gangeinheitlich als Plastspritzguß-Teil gefertigt. An der Hinterseite des Schleusenkörpers ist ein Rohr 2.2 für die Lagerung der Achse 3.9 befestigt.

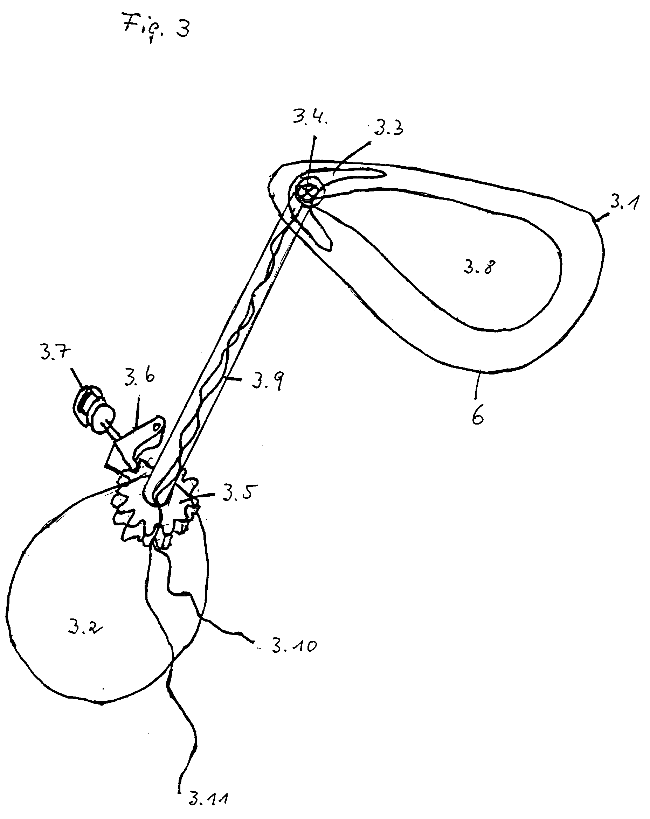

Figur 3 zeigt die Anordnung des oberen Verschlußdeckels 3.1 und des unteren Verschlußdeckels 3.2 in Verbindung mit der Achse 3.9 und der Verriegelung. Der Deckelmechanismus besteht aus einem oberen Verschlußdeckel 3.1 und einem unteren Verschlußdeckel 3.2. Erfindungswesentlich ist dabei, daß der untere Verschlußdeckel 3.2 um 90° versetzt ist. Durch das Öffnen des Verschlußdeckels 3.1 schließt der untere Verschlußdeckel 3.2. Die Verbindung der beiden Verschlußdeckel ist über die Achse 3.9 und eine Stahlversteifung 3.3 realisiert. Die Achse 3.9 ist hohl. An ihrem oberen Ende ist eine Kontrollampe eingesetzt "Tonne voll", welche vom Bordcomputer intern im Bordcomputer 9 gesteuert wird. An dem unteren Ende der Achse 3.9 befindet sich ein Sperrzahnrad 3.5 mit einem Magnetriegel 3.6 und einem Zugmagneten 3.7, welcher ebenfalls vom internen Bordcomputer 9 gesteuert wird. Die Handhabung der Schleuse erfolgt per Hand. Durch das Identifikationssystem, welches dem Benutzer zugeordnet wird, wird ein Befehl von dem internen Bordcomputer 9 auf den Zugmagneten 3.7 ausgelöst, welcher dadurch den Magnetriegel 3.6 aus dem Sperrzahnrad 3.5 hebt. Danach kann der Verschlußdeckel 3.1 geöffnet werden, womit durch die starre Verbindung ein automatisches Schließen des unteren Verschlusses 3.2 der konischen Schleuse hervorgerufen wird.

## Patentansprüche

1. Verwendung eines Transpondersystems zur Erfassung von Sammelmengen, insbesondere von Abfällen aus Haushalten, bei einer Müllbox (3) mit mehreren Müllbehältern, wobei jeder Müllbehälter eine Schleuse unterschiedlichen Fassungsvermögens (4,6,7,2.1) aufweist und eine Zuordnung des Transpondersystems zur entsprechenden Schleuse (4,6,7) so erfolgt, daß eine individuelle Sammelmengenzuordnung, Zuordnung der Verursacher, und eine Datenübertragung mit Hilfe der Verwendung des Transpondersystems entsprechend der jeweiligen Schleuse (4,6,7) durchgeführt werden kann.

2. Einrichtung zur Erfassung von Sammelmengen, insbesondere von Abfällen aus Haushalten, die von einem Benutzer mit Hilfe einer Identifikationseinrichtung und einer Füllstandsanzeige über eine Verriegelung zu öffnen ist, wobei eine Schleuse (4,6,7) vorhanden ist, so daß der Benutzer lediglich eine vorgegebene Maximalmenge von Abfall in die Schleuse einbringen kann, **dadurch gekennzeichnet**, daß eine Müllbox (3) eine Mehrzahl von Müllbehältern umschließt und zu jedem Müllbehälter eine kegelstumpfförmige Schleuse (4, 6, 7, 2.1) unterschiedlicher Fassungsvolumina auf der Müllbox zugeordnet ist, wobei die Schleuse (4, 6, 7, 2.1) einen oberen Verschlußdeckel (3.1) und ein unteren Verschlußdeckel (3.2), welche miteinander um 90° versetzt drehbar starr an einer gemeinsamen Achse (3.9) angeordnet sind, aufweist und zwischen dem oberen Verschlußdeckel (3.1) und dem unteren Verschlußdeckel (3.2) eine Verriegelung der Achse (3.9), wobei die Verriegelung in Verbindung mit dem Transpondersystem und einem boxinternen Computer (9) steht, vorhanden ist.

3. Einrichtung nach Anspruch 2, **dadurch gekennzeichnet**, daß die Verriegelung der Achse (3.9) mit einem Sperrzahnrad (3.5) mit einem Magnetriegel (3.6) ausgeführt ist, wobei an dem Magnetriegel (3.6) ein Zugmagnet (3.7) angeordnet ist.

4. Einrichtung nach Anspruch 3, **dadurch gekennzeichnet**, daß der Zugmagnet (3.7) in Verbindung mit dem Transponder steht, wobei das Transpondersystem in Verbindung mit dem boxinternen Computer (9) ausgeführt ist und somit das Steuersignal auf dem Zugmagnet (3.7) vom boxinternen Computer (9) anliegt.

5. Einrichtung nach Anspruch 4, **dadurch gekennzeichnet**, daß das Transpondersystem mit einem kontaktlosen Induktionsleser (8) ausgeführt ist, welcher jeweils an einer Schleuse (4, 6, 7, 2.1) vorhanden ist.

6. Einrichtung nach Anspruch 2, **dadurch gekennzeichnet**, daß bei den kegelstumpfförmigen Schleusen (4, 6, 7)jeweils verschiedenartige Größe nach oben hin der kleinere Verschlußdeckel (3.1) ausgeführt ist.

7. Einrichtung nach Anspruch 2, **dadurch gekennzeichnet**, daß zu einer jeweiligen Schleuse (4, 6, 7, 2.1) eine Füllstandsanzeige (5) vorhanden ist, welche über den boxinternen Computer (9) geschaltet ist.

8. Einrichtung nach Anspruch 2, **dadurch gekennzeichnet**, daß die Müllbehälter vorzugsweise als Müllgroßbehälter (1) ausgeführt sind.

9. Einrichtung nach Anspruch 2, **dadurch gekennzeichnet**, daß der boxinterne Computer (9) mit einem Solarakkumulator (13), welcher eine Solarbordspannungsversorgung (10) aufweist, ausgestattet ist und somit eine alternative Stromversorgung realisiert ist.

## Claims

1. Employment of a transponder systems for the recording of collected quantities -especially refuse from households- by way of a waste box (3) which includes several waste containers, each of which has an entry lock of varying capacities (4,6,7,2.1). A connection of the transponder system to each respective lock occurs so that an individual classifying of the collected quantities and of the users can be carried out, as well as a data transfer with the help of the transponder system between itself and each of the individual locks (4,6,7).

2. Apparatus for the recording of collected quantities -especially refuse from households- which is opened by the user with the help of an identification devise and a level indicator by way of a latching devise. An entry lock (4,6,7) is provided and set up so that the user can deposit only a predetermined maximum amount of refuse into it. The waste box (3) includes several waste containers and each of these waste container is provided with truncated cone-shaped entry locks (4, 6, 7, 2.1) of varying volumes. The entry locks (4, 6, 7, 2.1) have an upper cover (3.1) and a lower cover (3.2) which are positioned at a 90° angle to each other and fixed on a common pivoting axle (3.9). Between the upper cover (3.1) and the lower cover (3.2) there is a latching devise for the axle (3.9), whereby the latching devise is connected to the transponder system and an internal computer (9) located in the waste box.

3. Apparatus according to claim 2, **characterized by** a latching of the axle (3.9), which is carried out by ratchet wheel (3.5) with magnetic latch (3.6), in which a zug magnet (3.7) is attached to the magnetic latch (3.6).

4. Apparatus according to claim 3, **characterized by** the zug magnet (3.7) being connected to the transponder, whereby the transponder system functions in connection with the internal computer (9) and therefore the control signal from the internal computer (9) is directed to the zug* magnet (3.7).

5. Apparatus according to claim 4, **characterized by** a transponder system which functions with non-contact induction-readers (8) which installed on each of the respective locks (4, 6, 7, 2.1).

6. Apparatus according to claim 2, **characterized by** the truncated cone-shaped locks (4, 6, 7) of various sizes having its smaller cover (3.1) at the top.

7. Apparatus according to claim 2, **characterized in that** for each one of the respective locks (4, 6, 7, 2.1) there is a level indicator (5) which is connected via the internal computer (9).

8. Apparatus according to claim 2, **characterized by** the waste containers being used mainly as waste bulk-tanks (1).

9. Apparatus according to claim 2, **characterized by** the internal computer (9) being equipped with a solar accumulator (13) which includes a solar bord (10) power supply and is provided, thereby, with an alternative supply of electricity.

## Revendications

1. Application d'un système à transpondeur permettant la saisie de quantités, d'ordures ménagères notamment, pour un conteneur à ordures (3) à plusieurs récipients, chaque récipient présentant un sas de contenance différenciée (4, 6, 7, 2.1), et une affectation du système à transpondeur au sas correspondant (4, 6, 7) étant réalisée en sorte que peuvent être exécutées une attribution spécifique de quantités, attribution par responsables, et une communication de données par l'application du système à transpondeur en fonction du sas respectif (4, 6, 7).

2. Dispositif de saisie de quantités, d'ordures ménagères notamment, dont le verrouillage doit être ouvert par un utilisateur au moyen d'un dispositif d'identification et d'un indicateur de remplissage, un sas (4, 6, 7) étant présenté, de sorte que l'utilisateur ne peut faire pénétrer qu'une quantité maximum déterminée de déchets par le sas, **caractérisé en ce qu**'un conteneur à ordures (3) comprend plusieurs récipients et que des sas tronconiques (4, 6, 7, 2.1) de contenances volumiques différenciées sont disposés sur le conteneur et affectés chacun à un récipient, un sas (4, 6, 7, 2.1) présentant un couvercle supérieur de fermeture (3.1) et un couvercle inférieur de fermeture (3.2), lesquels sont fixés sur un axe commun avec un décalage réciproque de 90°, et un verrouillage d'axe (3.9) étant disposé entre le couvercle supérieur de fermeture (3.1) et le couvercle inférieur de fermeture (3.2), le verrouillage étant relié au système à transpondeur et à un calculateur (9) disposé à l'intérieur du conteneur.

3. Dispositif selon revendication 2, **caractérisé en ce que** le verrouillage d'axe (3.9) est exécuté au moyen d'une roue à rochet (3.5) à verrou magnétique (3.6), un électroaimant d'attraction (3.7) étant disposé sur le verrou magnétique (3.6).

4. Dispositif selon revendication 3, **caractérisé en ce que** l'électro-aimant d'attraction (3.7) est relié au transpondeur, le système à transpondeur étant lui-même relié au calculateur (9) disposé à l'intérieur du conteneur, appliquant ainsi le signal de commande sur l'électro-aimant d'attraction (3.7) depuis le calculateur (9) interne au conteneur.

5. Dispositif selon revendication 4, **caractérisé en ce que** le système à transpondeur est exécuté avec un lecteur à induction (8) sans contact, lequel est présent sur chacun des sas respectifs (4, 6, 7, 2.1).

6. Dispositif selon revendication 2, **caractérisé en ce que** le petit couvercle de fermeture (3.1) est exécuté à chaque fois avec des dimensions différentes vers le haut de chaque sas tronconique (4, 6, 7).

7. Dispositif selon revendication 2, **caractérisé en ce qu**'un indicateur de remplissage (5) est disposé pour chacun des sas respectifs (4, 6, 7, 2.1), mis en circuit par le calculateur (9) interne au conteneur.

8. Dispositif selon revendication 2, **caractérisé en ce que** les récipients à déchets sont préférentiellement exécutés comme récipients de grande contenance (1).

9. Dispositif selon revendication 2, **caractérisé en ce que** le calculateur (9) interne au conteneur est pourvu d'un accumulateur solaire (13) présentant une alimentation interne en tension par l'énergie solaire (10), une alimentation alternative en courant étant ainsi réalisée.
